# EUROPEAN PATENT SPECIFICATION

(11) **EP 4 446 136 B1**
(45) Date of publication and mention of the grant of the patent: **13.05.2026**
(21) Application number: 22903761.9
(22) Date of filing: 22.06.2022
(51) Int. Cl.: B60C 19/00, B60C 13/04, B29D 30/00

(54) **TIRE**
REIFEN
PNEU

(30) Priority: 09.12.2021 JP 2021200135
(43) Date of publication of application: 16.10.2024
(73) Proprietor: BRIDGESTONE CORPORATION, Chuo-ku Tokyo 104-8340 (JP)
(72) Inventor: SUKEGAWA, Shin, Tokyo 104-8340 (JP); HOSHINO, Hironori, Tokyo 104-8340 (JP); MORI, Hirotomo, Tokyo 104-8340 (JP)
(74) Representative: Marks & Clerk LLP
(86) International application number: PCT/JP2022/024948
(87) International publication number: WO 2023/105825

(56) References cited:
- EP-A1- 3 533 640
- FR-A1- 2 966 768
- JP-A- 2002 214 060
- JP-A- 2004 090 775
- JP-A- 2005 132 177
- JP-A- 2006 056 443
- JP-A- 2006 511 393
- JP-A- 2016 159 713
- JP-A- 2020 069 941
- JP-A- 2020 083 044
- US-B2- 7 112 251

## Description

### TECHNICAL FIELD

The present invention relates to a tire.

### BACKGROUND

Tires with communication devices embedded within are known. Patent Literature (PTL) 1 discloses this type of tire.

EP 3 533 640 A1 relates to an RFID mesh label configured to be integrally incorporated within a vulcanized tire and to further provide unique identifier(s) and/or other information about the vulcanized tire during and/or post-vulcanization, the RFID mesh label including a face layer configured to be positioned adjacent or flush to an outer surface of the vulcanized tire; an RFID layer positioned underneath the face layer, the RFID layer having an RFID device that is configured to provide unique identifier(s) and/or other information about the vulcanized tire upon being read with an RFID reader; and a mesh backing overlying the RFID layer and adapted to be integrally incorporated in a vulcanized tire after subjecting a green tire to a vulcanization process.

FR 2 966 768 A1 relates to a method involving placing an assembly including an electronic device and a vulcanized rubber mass that encapsulates the electronic device, in contact with raw rubber masses of a blank of a tire. The vulcanized rubber mass encapsulating the electronic device is electrically insulating, where the vulcanized rubber mass has an average thickness between 1 mm and 2 mm.

US 7 112 251 B2 relates to a tire having a portion thereof such as a sidewall component that glows-in-the-dark due to the presence of a phosphorescent layer thereon.

JP 2020 069941 A relates to a tire in which a surface of a side wall rubber of a tire body part has a structure that has a vulcanized rubber layer and a polyurethane foam layer. The structure has parts mutually different in color in a thickness direction of the structure. In a method of manufacturing the tire of the present invention, the tire is manufactured by using the vulcanized tire body part or the pre-vulcanization tire body part, the pre-vulcanization vulcanized rubber layer, and the polyurethane foam layer.

JP 2006 056443 A relates to a pneumatic tire, provided with a transponder, including an identification marker for indicating a position of the transponder placed on an outer surface of the pneumatic tire in which the transponder is located. The pneumatic tire, provided with the transponder on a side wall part, includes the identification marker for indicating the position of the transponder on the outer surface of the pneumatic tire in which the transponder is located and at least an identification marker for indicating the position of the transponder in a circumferential direction of the pneumatic tire, placed on an outer surface of a side wall portion opposite to a side wall part where the transponder is arranged.

JP 2002 214060 A relates to a green tire is vulcanized, in which a transponder where a circuit board on which a sensor and other electronic parts are mounted is closed with a case is embedded between an inner liner and a carcass ply. After the vulcanization, the tip of a protruding part of the case is removed together with a part of the inside wall surface of the tire, and an opening part is formed at the tip of the protruding part so that the inside of the tire airspace communicates with the sensor inside the case.

JP 2004 090775 A relates to a pneumatic tire having a film-like electronic device. The film-like electronic device slidable in sheet-like members and disposed on both sides of the film-like electronic device is fitted inside a tire or to a surface of the tire. When the pneumatic tire is fitted to a rim, and the internal pressure is applied to the tire, the sheet-like members and are pulled as the pneumatic tire is inflated and deformed.

JP 2016 159713 A relates to a racing slick tire, in which an abrasion degree identifier formed by a hole or a groove is provided at a plurality of places in a tire circumferential direction and/or in a tire width direction of a tread part, and a luminous paint is applied to inner surface of the abrasion degree identifier. The inner surface of the abrasion degree identifier comprises a bottom surface and a side surface, and preferably, the luminous paint is applied only to the side surface in the inner surface.

### CITATION LIST

### Patent Literature

PTL 1: JP 2004-148953 A

### SUMMARY

### (Technical Problem)

In the cases of recycling tires in which communication devices are embedded, the communication devices are preferably removed and separated from the tires. When the tires are recycled, the inclusion of resin used in the communication devices may, for example, degrade the quality of recycled rubber. Also, when the tires are recycled, the inclusion of various types of metals used in the communication devices may, for example, require time and effort to separate steel cords of the tires.

It would be helpful to provide a tire in which, when a communication device embedded in the tire is removed by hollowing out the tire, it is easy to confirm whether the entirety of the communication device is included in a hollowed out portion.

### (Solution to Problem)

A tire, as a first aspect of the present invention, includes a tire body and a covered communication device at least a part of which is embedded in the tire body. The covered communication device includes a communication device and a covering body that covers the periphery of the communication device. The covering body includes a distinction portion that is distinguishable from a portion located around the covering body, of the tire body, in a cross-sectional view in a plane passing through the covered communication device. The covering body comprises a covering different-color layer having a different hue from the portion located around the covering body, of the tire body, wherein the distinction portion is the covering different-color layer. The covering body comprises covering rubber that covers the periphery of the communication device. The covering body comprises a covering outer surface layer that covers a periphery of the covering rubber, wherein the covering different-color layer is the covering outer surface layer.

### (Advantageous Effect)

According to the present invention, it is possible to provide a tire in which, when a communication device embedded in the tire is removed by hollowing out the tire, it is easy to confirm whether the entirety of the communication device is included in a hollowed out portion.

### BRIEF DESCRIPTION OF THE DRAWINGS

In the accompanying drawings:
FIG. 1 is a cross-sectional view of a tire, as an embodiment of the present invention, in a tire width direction;
FIG. 2 is a diagram illustrating an example of a hollowing out method of a communication device illustrated in FIG. 1;
FIG. 3 is a diagram illustrating a hollowed out hole when the entirety of a covered communication device is hollowed out by the hollowing out method illustrated in FIG. 2;
FIG. 4 is a diagram illustrating a hollowed out hole when only a part of the covered communication device is hollowed out by the hollowing out method illustrated in FIG. 2;
FIG. 5 is a front view of a label area illustrated in FIG. 1;
FIG. 6 is a side view of the tire illustrated in FIG. 1, viewed from the side of a first side portion;
FIG. 7 is a cross-sectional view of a tire, as an embodiment of the present invention, in the tire width direction; and
FIG. 8 is a cross-sectional view of a tire, as an embodiment not according to the present invention, in the tire width direction.

### DETAILED DESCRIPTION

Embodiments of a tire according to the present invention will be exemplarily described below with reference to the drawings. In the drawings, the same reference signs denote common components. In this specification, a tire width direction refers to a direction parallel to the central axis of the tire. A tire radial direction refers to a radial direction that is orthogonal to the central axis of the tire and centered on the central axis. A tire circumferential direction refers to a direction in which the tire rotates about the central axis of the tire.

In this specification, a "tread outer surface" means an outer circumferential surface throughout the entire circumference of the tire that is in contact with a road surface when the tire mounted on a rim and filled with a specified internal pressure is rotated under a maximum load (hereinafter also referred to as "maximum load condition"). In addition, "tread ends" mean outer ends of the tread outer surface in the tire width direction.

In this specification, the "rim" means a standard rim (Measuring Rim in ETRTO's STANDARDS MANUAL and Design Rim in TRA's YEAR BOOK) of an applicable size conformable to industrial standards valid for regions in which tires are produced and used, as described in or to be described in JATMA YEAR BOOK of the Japan Automobile Tyre Manufacturers Association, Inc. (JATMA) in Japan, STANDARDS MANUAL of the European Tyre and Rim Technical Organisation (ETRTO) in Europe, YEAR BOOK of the Tire and Rim Association, Inc. (TRA) in the United States, or the like, but in the case of a size that is not listed in such industrial standards, a rim with a width corresponding to a bead width of the tire. The "rim" may be of a size that may be included in the above industrial standards in the future, as well as a current size. Examples of the "size that is included in the future" may be sizes listed as "FUTURE DEVELOPMENTS" in the 2013 edition of STANDARDS MANUAL of the ETRTO.

In this specification, the "specified internal pressure" means an air pressure (maximum air pressure) corresponding to a maximum load capacity of a single wheel in an applicable size and ply rating as described in the above industrial standards such as JATMA YEAR BOOK, but in the case of a size that is not listed in the above industry standards, an air pressure (maximum air pressure) corresponding to a maximum load capacity specified for each vehicle on which the tire is mounted. In this specification, the "maximum load" means a load corresponding to the maximum load capacity of the tire of an applicable size listed in the above industrial standards, but in the case of a size that is not listed in the above industrial standards, a load corresponding to the maximum load capacity specified for each vehicle on which the tire is mounted.

### <First Embodiment>

A pneumatic tire 1 (hereinafter simply referred to as "tire 1") as an embodiment of the tire according to the present invention will be exemplarily described below with reference to the drawings. Unless otherwise stated, the tire 1 described below is assumed to mean a tire 1 that is mounted on a rim, filled with a specified internal pressure, and in a maximum load condition. The type of tire 1 is not particularly limited, and may be, for example, a tire for trucks or buses, or a tire for passenger cars.

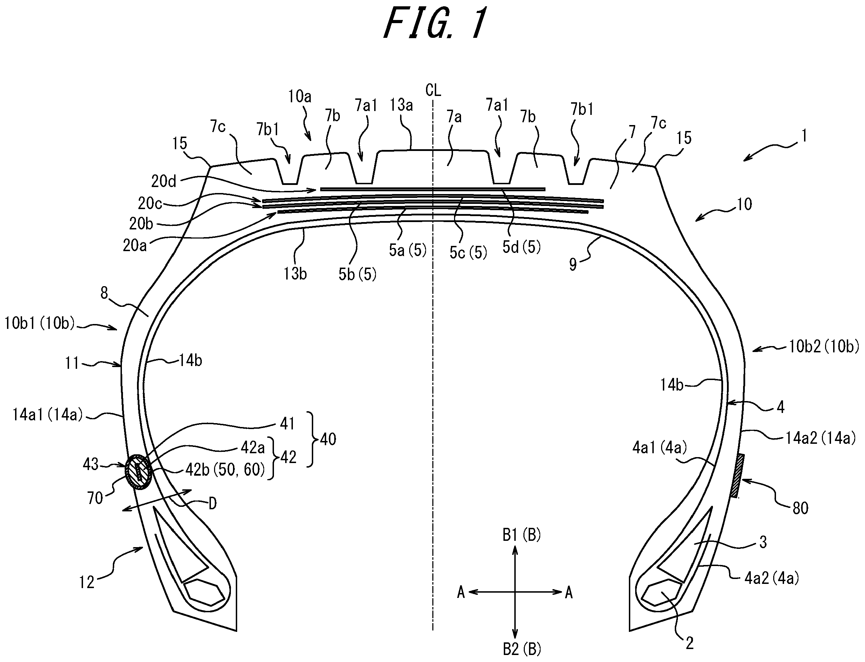

FIG. 1 is a cross-sectional view of the tire 1 in the tire width direction. As illustrated in FIG. 1, the tire 1 includes a tire body 10 and a covered communication device 40.

The tire body 10 includes a tread portion 10a, a first side portion 10b1, and a second side portion 10b2. The first side portion 10b1 extends from one end of the tread portion 10a in a tire width direction A toward an inner side B2 in a tire radial direction B. The second side portion 10b2 extends from the other end of the tread portion 10a in the tire width direction A toward the inner side B2 in the tire radial direction B. Hereinafter, the first side portion 10b1 and the second side portion 10b2 are simply described as "side portions 10b" when not specifically distinguished.

The side portions 10b each have a sidewall portion 11 and a bead portion 12. The sidewall portion 11 is connected to the end of the tread portion 10a in the tire width direction A and extends toward the inner side B2 in the tire radial direction B. The bead portion 12 is connected to an end of the sidewall portion 11 on the inner side B2 in the tire radial direction B.

More specifically, the tire body 10 of this embodiment includes bead cores 2, bead fillers 3, a carcass 4, belts 5, tread rubber 7, side rubber 8, and an inner liner 9. However, the tire body 10 may include other components, not limited to the above components.

### [Tire Body 10]

### [[Bead Cores 2 and Bead Fillers 3]]

The bead cores 2 and the bead fillers 3 are embedded in the bead portions 12 of the side portions 10b. Each bead core 2 includes a bead cord that is surrounded by a rubber coating. The bead cord is formed of a steel cord. Each bead filler 3 is made of rubber and is located on an outer side B1 in the tire radial direction B with respect to the bead core 2.

### [[Carcass 4]]

The carcass 4 extends toroidally between the pair of bead portions 12, which is constituted of the bead portion 12 of the first side portion 10b1 and the bead portion 12 of the second side portion 10b2, more specifically between the pair of bead cores 2. Specifically, the carcass 4 of this embodiment includes a carcass ply 4a. The carcass ply 4a is folded from the inside to the outside in the tire width direction A around the respective bead cores 2. The carcass ply 4a may have a plurality of ply cords arranged parallel to each other and coating rubber that coats the plurality of ply cords. The carcass 4 of this embodiment includes only one carcass ply 4a, but may include two or more carcass plies 4a. The plurality of ply cords of the carcass ply 4a may be arranged at an angle of, for example, 75° to 90° with respect to a tire circumferential direction C. The ply cords of the carcass ply 4a can be, for example, metal cords such as steel cords.

More specifically, the carcass ply 4a of this embodiment has a body part 4a1 located between the pair of bead cores 2, and folded parts 4a2 that are connected to the body part 4a1 and folded from the inside to the outside in the tire width direction A around the respective bead cores 2. The above-described bead fillers 3 are each located between the body part 4a1 and each folded part 4a2 of the carcass ply 4a.

### [[Belts 5]]

The belts 5 are embedded in the tread portion 10a. The tire body 10 of this embodiment has four of the belts 5 on the outer side B1 of a crown part of the carcass 4 in the tire radial direction B. The four belts 5 of this embodiment include a first belt 5a, a second belt 5b, a third belt 5c, and a fourth belt 5d. Hereafter, the first belt 5a, the second belt 5b, the third belt 5c, and the fourth belt 5d are simply referred to as "belts 5" when not specifically distinguished. The first belt 5a is located at the most inner side B2 in the tire radial direction B, among the first belt 5a, the second belt 5b, the third belt 5c, and the fourth belt 5d. The fourth belt 5d is located at the most outer side B1 in the tire radial direction B, among the first belt 5a, the second belt 5b, the third belt 5c, and the fourth belt 5d. The second belt 5b and the third belt 5c are located between the first belt 5a and the fourth belt 5d in the tire radial direction B. More specifically, the third belt 5c is located on the outer side B1 of the second belt 5b in the tire radial direction B.

In this embodiment, the first belt 5a, the second belt 5b, the third belt 5c, and the fourth belt 5d constitute four belt layers. Specifically, the first belt 5a forms a first belt layer 20a located at the most inner side B2 in the tire radial direction B. The fourth belt 5d forms a fourth belt layer 20d located at the most outer side B1 in the tire radial direction B. The second belt 5b forms a second belt layer 20b. The third belt 5c forms a third belt layer 20c.

Each belt 5 may include a plurality of belt cords arranged in parallel to each other and coating rubber that coats the plurality of belt cords. The first to fourth belt layers 20a to 20d are inclined belt layers in which the belt cords form a predetermined angle with respect to the tire circumferential direction C. The belt cords of two belt layers adjacent in the tire radial direction B, among the first to fourth belt layers 20a to 20d, may be inclined in the same direction or in opposite directions with respect to the tire circumferential direction C.

The material of the belt cords of the belts 5 is not particularly limited. The belt cords of the belts 5 may be, for example, metal cords or organic fiber cords. A rubber composition used for the coating rubber of the belts 5 is not particularly limited.

### [[Tread Rubber 7]]

As illustrated in FIG. 1, the tread rubber 7 is located on the outer side B1 of the crown part of the body part 4a1 of the carcass ply 4a and on the outer side B1 of the first to fourth belts 5a to 5d, which constitute the first to fourth belt layers 20a to 20d, in the tire radial direction B. A tread outer surface 13a, which is an outer surface of the tread portion 10a of this embodiment, is composed of the tread rubber 7. In the tread outer surface 13a, as illustrated in FIG. 1, there are formed two inner circumferential grooves 7a1, which zone a center land area 7a through which a tire equatorial plane CL passes, and two outer circumferential grooves 7b1, which are located outside the inner circumferential grooves 7a1 in the tire width direction A and zone intermediate land areas 7b each between the inner circumferential groove 7a1 and the outer circumferential groove 7b1. In the tread outer surface 13a of this embodiment, shoulder land areas 7c are zoned each between the outer circumferential groove 7b1 and a tread end 15 located outside the outer circumferential groove 7b1 in the tire width direction A. In the tread outer surface 13a, for example, width directional grooves extending in the tire width direction A or the like may be formed.

### [[Side Rubber 8]]

The side rubber 8 is disposed outside the body part 4a1 and the folded parts 4a2 of the carcass ply 4a in the tire width direction A. Side outer surfaces 14a, which are outer surfaces of the side portions 10b of this embodiment, are composed of the side rubber 8. Ends of the side rubber 8 on the outer side B1 in the tire radial direction B are connected to ends of the above-described tread rubber 7 in the tire width direction A.

Thus, in this embodiment, an outer surface of the tire body 10 includes the tread outer surface 13a and the side outer surfaces 14a, which are connected to the tread outer surface 13a.

### [[Inner Liner 9]]

The inner liner 9 covers a tire inner surface side of the body part 4a1 of the carcass ply 4a, and constitutes an inner surface of the tire body 10. The inner surface of the tire body 10 includes a tread inner surface 13b, which is an inner surface of the tread portion 10a, and side inner surfaces 14b, which are inner surfaces of the side portions 10b. The inner liner 9 is laminated on the tire inner surface side of the body part 4a1 of the carcass ply 4a. The inner liner 9 may be formed of, for example, butyl rubber with low air permeability.

### [Covered Communication Device 40]

As illustrated in FIG. 1, the covered communication device 40 has a communication device 41 and a covering body 42. The covering body 42 covers the periphery of the communication device 41. As illustrated in FIG. 1, the covered communication device 40 is embedded in the tire body 10. Specifically, a part of the covered communication device 40 of this embodiment is embedded in the tire body 10. Another part of the covered communication device 40 of this embodiment is exposed from the tire body 10. More specifically, in this embodiment, only a part of the covering body 42 of the covered communication device 40 is exposed from the outer surface of the tire body 10. Thus, only a part of the covered communication device 40 of this embodiment is embedded in the tire body 10. However, not limited to this configuration, the entirety of the covered communication device 40 may be embedded in the tire body 10.

As illustrated in FIG. 1, the covered communication device 40 of this embodiment is embedded in the side portion 10b of the tire body 10. More specifically, the covered communication device 40 of this embodiment is embedded in the first side portion 10b1 of the tire body 10. The covered communication device 40 of this embodiment is located, in the first side portion 10b1, outside the body part 4a1 of the carcass 4 in the tire width direction A. However, the covered communication device 40 may be embedded in another location of the first side portion 10b1.

Furthermore, the covered communication device 40 may be embedded in another location than the first side portion 10b1. The covered communication device 40 may be embedded in, for example, the second side portion 10b2 of the tire body 10. The covered communication device 40 may also be embedded in the tread portion 10a of the tire body 10.

The configuration of the communication device 41 of the covered communication device 40 is not particularly limited as long as the communication device 41 is configured to be able to wirelessly communicate with a predetermined device outside the tire 1. An example of the communication device 41 is an RF tag. The RF tag, as the communication device 41, can wirelessly communicate with a reader/writer located outside the tire 1. The RF tag may be, for example, a passive RF tag that is operated by electric power supplied from the reader/writer located outside the tire 1. Specifically, the RF tag, as the communication device 41, can receive, at an antenna of the RF tag, information transmitted from an antenna of the reader/writer in the form of a radio wave or a magnetic field. Due to rectification (in the case of the radio wave) or resonance (in the case of the magnetic field), electric power is generated at the antenna of the RF tag, and a memory and a controller of the RF tag perform predetermined operations. The controller of the RF tag can, for example, read out information from the memory of the RF tag and transmit the information (back) to the reader/writer from the antenna in the form of a radio wave or a magnetic field. The antenna of the reader/writer receives the radio wave or the magnetic field from the RF tag. A controller of the reader/writer retrieves the received information to acquire the information stored in the memory of the RF tag. The above-described memory and controller of the RF tag may be configured, for example, in an integrated circuit (IC chip) including a non-volatile memory.

As described above, the covering body 42 covers the periphery of the communication device 41. The covering body 42 of this embodiment includes covering rubber 42a, which covers the periphery of the communication device 41, and a covering outer surface layer 42b, which covers the periphery of the covering rubber 42a.

It is known that the RF tag, as the communication device 41, is affected by the physical properties (dielectric constant, magnetic permeability, resistivity, and the like) of surrounding metals and rubber when installed in the tire body 10, resulting in the shortening of communication distance and the generation of noise. In order to prevent the shortening of communication distance and the generation of noise, the communication device 41 is preferably covered with a rubber composition with a low dielectric constant. Therefore, the communication device 41 of this embodiment is covered with the covering rubber 42a composed of a rubber composition with a low dielectric constant.

A rubber component of the rubber composition constituting the covering rubber 42a may be, for example, one normally used in the tread rubber 7, the side rubber 8, and the like of the tire body 10. The rubber component of the covering rubber 42a may be, for example, natural rubber, polyisoprene rubber, polybutadiene rubber, ethylene-propylene rubber, butyl rubber, or the like. The dielectric constant of the rubber composition constituting the covering rubber 42a may be achieved, for example, by adjusting the amount of carbon black or silica.

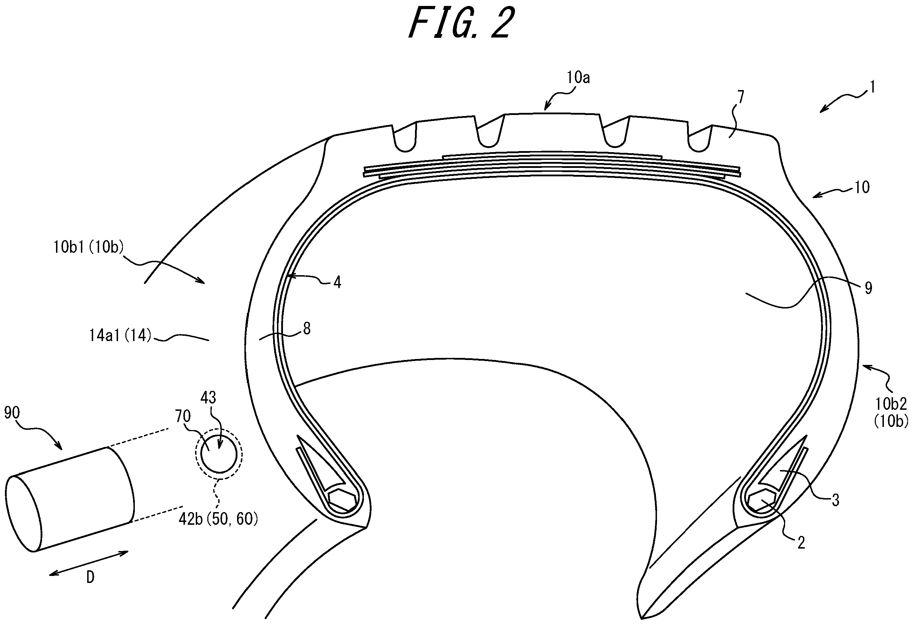

The covering outer surface layer 42b is a covering different-color layer 50 having a different hue from the side rubber 8, which is a portion located around the covering outer surface layer 42b, of the tire body 10. The side rubber 8 is usually black in color due to the blend of carbon black. Therefore, the hue of the covering outer surface layer 42b of this embodiment is other than black. By providing such a covering different-color layer 50, when the communication device 41 embedded in the tire 1 is removed by hollowing out the tire 1, it becomes easier to confirm whether the entirety of the communication device 41 is included in a hollowed out portion. This detail will be described below (see FIGS. 2 to 4).

The covering outer surface layer 42b may have the same hue as the covering rubber 42a described above, or may have a different hue. However, when carbon black is blended into the rubber composition constituting the covering rubber 42a to achieve a low dielectric constant, the hue of the covering rubber 42a is black, which is the same as the hue of the side rubber 8. In such a case, the hue of the covering outer surface layer 42b is preferably different from that of the side rubber 8 and the covering rubber 42a.

The covering outer surface layer 42b, as the covering different-color layer 50, may be composed of, for example, paint containing pigment. In other words, the covering outer surface layer 42b, as the covering different-color layer 50, may be coloring paint laminated to an outer surface of the covering rubber 42a. The covering outer surface layer 42b, as the covering different-color layer 50, may be, for example, a rubber composition colored with pigment other than carbon black. In other words, the covering outer surface layer 42b, as the covering different-color layer 50, may be colored rubber that is laminated to the outer surface of the covering rubber 42a.

The covering outer surface layer 42b, as the covering different-color layer 50, preferably contains a phosphorescent material. The covering outer surface layer 42b containing the phosphorescent material may be composed of, for example, paint containing the phosphorescent material in addition to pigment. The covering outer surface layer 42b containing the phosphorescent material may be composed of, for example, a rubber composition containing the phosphorescent material in addition to pigment other than carbon black.

The phosphorescent material is not particularly limited, and any known phosphorescent material may be used. Examples of the phosphorescent material include, for example, compositions: SrA12O4: Eu, Dy; Sr4A114O25: Eu, Dy; SrA12O4: Eu, Dy + Sr4A114O25: Eu, Dy; Sr4A114O25: Eu, Dy + CaAl2O4: Eu, Nd; CaAl2O4: Eu, Nd; ZnS: Cu, Mn, Co; ZnS: Cu; and the like.

### [[Distinction Portion 60 of Covering Body 42]]

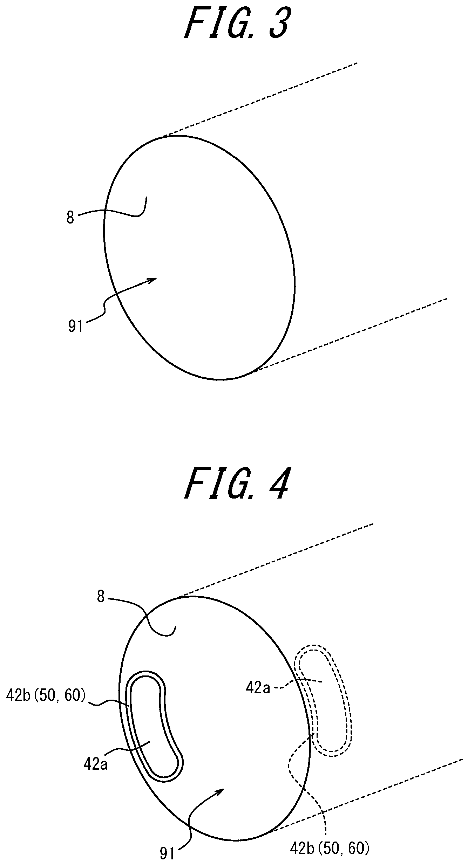

Next, a distinction portion 60 of the covering body 42 will be described with reference to FIGS. 1 to 4. FIG. 2 is an explanation diagram that explains an example of a hollowing out method of the communication device 41. FIG. 3 is a diagram illustrating a hollowed out hole 91 when the entirety of the covered communication device 40 is hollowed out by the hollowing out method illustrated in FIG. 2. FIG. 4 is a diagram illustrating a hollowed out hole 91 when only a part of the covered communication device 40 is hollowed out by the hollowing out method illustrated in FIG. 2.

The distinction portion 60 can be distinguished from a portion located around the covering body 42, of the tire body 10, in a cross-sectional view in a plane passing through the covered communication device 40 (see FIG. 1). In other words, in this embodiment, the distinction portion 60 of the covering body 42 is configured to be distinguishable from the side rubber 8 located around the covering body 42, of the tire body 10, in the above cross-sectional view (see FIG. 1). Here, "distinguishable" means to be capable of being distinguished through vision. More specifically, the distinction portion 60 is the covering outer surface layer 42b, as the covering different-color layer 50. The covering outer surface layer 42b has a different hue from the surrounding side rubber 8, as described above. Such a covering outer surface layer 42b, as the covering different-color layer 50, is distinguishable from the surrounding side rubber 8 in the cross-sectional view in the plane passing through the covered communication device 40 (see FIG. 1).

In the hollowing out method illustrated in FIG. 2, a part of the tire 1 can be hollowed out, using a cylindrical hollowing out member 90, in a tire wall thickness direction D into a cylindrical shape. In the example illustrated in FIG. 3, the covering outer surface layer 42b, as the covering different-color layer 50, is not exposed on an inner surface of the hollowed out hole 91 formed by the hollowing out member 90. In other words, this indicates that the cylindrical hollowing out member 90 has hollowed out a part of the tire 1 without intersecting the covering outer surface layer 42b, as the covering different-color layer 50. By confirming that the covering outer surface layer 42b, as the covering different-color layer 50, is not exposed on the inner surface of the hollowed out hole 91, it can be confirmed that the entirety of the covered communication device 40 including the entirety of the communication device 41 has been hollowed out.

In the example illustrated in FIG. 4, the covering outer surface layer 42b, as the covering different-color layer 50, is exposed on the inner surface of the hollowed out hole 91 formed by the hollowing out member 90. In other words, this indicates that the cylindrical hollowing out member 90 has hollowed out a part of the tire 1 in such a manner as to intersect the covering outer surface layer 42b, as the covering different-color layer 50. By confirming that the covering outer surface layer 42b, as the covering different-color layer 50, is exposed on the inner surface of the hollowed out hole 91, it can be confirmed that not the entirety of the covered communication device 40 including the entirety of the communication device 41 has been hollowed out. In other words, it is possible to grasp the possibility that a part of the communication device 41 remains without being hollowed out.

Thus, by providing the distinction portion 60 (in this embodiment, the covering different-color layer 50 as an example of the distinction portion 60), when the communication device 41 embedded in the tire 1 is removed by hollowing out the tire 1, it becomes easier to confirm whether the entirety of the communication device 41 is included in the hollowed out portion.

The distinction portion 60 of this embodiment is the covering different-color layer 50 having the different hue from the portion located around the covering body 42 (side rubber 8 in this embodiment), of the tire body 10, as described above, but is not limited to this configuration. The distinction portion 60 may have, for example, a different brightness, saturation, gloss, or the like from the portion located around the covering body 42 (side rubber 8 in this embodiment), of the tire body 10. However, as in this embodiment, the distinction portion 60 is preferably a covering different-color layer 50 having at least a different hue from the portion located around the covering body 42 (side rubber 8 in this embodiment), of the tire body 10. By differing the hue, the distinction power of the distinction portion 60 can be enhanced.

The covering different-color layer 50, as the distinction portion 60, is the covering outer surface layer 42b laminated on the outer surface of the covering rubber 42a that covers the periphery of the communication device 41. The layer thickness of the covering outer surface layer 42b is smaller than that of the covering rubber 42a. With this configuration, the covering rubber 42a, which is aimed at preventing the shortening of communication distance and the generation of noise, and the covering outer surface layer 42b, which is aimed at improving distinguishability, can be configured in a functionally separated manner. In other words, there is no need to make a single layer that shares the functions of preventing the shortening of communication distance and the generation of noise and improving distinguishability, so the degree of freedom in the design of the covering body 42 can be increased.

As described above, the covering outer surface layer 42b, as the covering different-color layer 50, preferably contains the phosphorescent material. In other words, the distinction portion 60 preferably contains the phosphorescent material. This can realize the distinction portion 60 that emits light in a dark environment, resulting in an increase in the distinguishability of the distinction portion 60 in the dark environment.

As illustrated in FIG. 1, a part of the covering body 42 of the covered communication device 40 of this embodiment is exposed outside the tire body 10. More specifically, in this embodiment, a part of the distinction portion 60 of the covering body 42 is exposed outside the tire body 10. The exposure of the distinction portion 60 outside the tire body 10 allows to share the distinction portion 60 as a label area that enables the position of the communication device 41 to be distinguished from outside the tire 1. In this embodiment, a portion of the covering body 42 that is exposed outside the tire body 10 is hereinafter described as "exposed portion 43". An exposed surface, which is a surface of the exposed portion 43 of the covering body 42, is constituted of the covering outer surface layer 42b, as the covering different-color layer 50. In other words, the exposed surface, which is the surface of the exposed portion 43, has a different hue from an outer surface located around the exposed portion 43, of the outer surface of the tire body 10, and constitutes a label area 70 that can be distinguished from outside the tire 1.

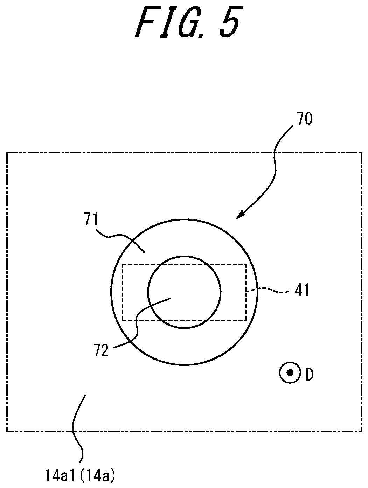

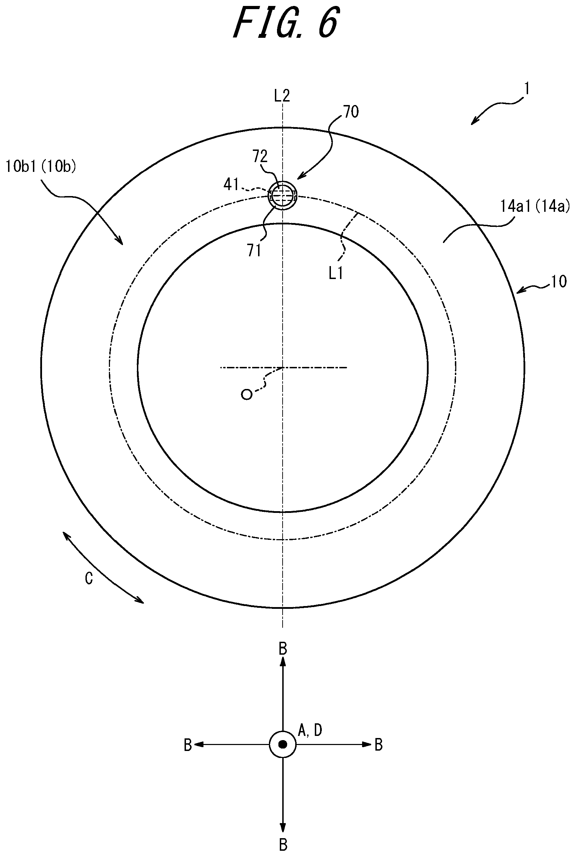

FIGS. 5 and 6 illustrate front views of the label area 70. In particular, FIG. 6 is a side view of the tire 1 viewed from the side of the first side portion 10b1. In FIGS. 5 and 6, the position of the communication device 41 is indicated by dashed lines. As illustrated in FIG. 6, in this embodiment, the label area 70 and the communication device 41 are disposed at the same position in the tire radial direction B. Here, "the label area 70 and the communication device 41 are disposed at the same position in the tire radial direction B" means that there is at least one virtual circle L1 around the central axis O of the tire 1 that passes through the label area 70 and the communication device 41 in the side view of the tire 1 (see FIG. 6). In other words, it is not limited to a case in which the extension areas of the respective label area 70 and communication device 41 in the tire radial direction B are completely coincident.

As illustrated in FIG. 6, in this embodiment, the label area 70 and the communication device 41 are disposed at the same position in the tire circumferential direction C. Here, "the label area 70 and the communication device 41 are disposed at the same position in the tire circumferential direction C" means that, in the side view of the tire 1 (see FIG. 6), there is at least one virtual straight line L2 that passes through the central axis O of the tire 1 and passes through the label area 70 and the communication device 41 on one side with respect to the central axis O. In other words, it is not limited to a case in which the extension areas of the respective label area 70 and communication device 41 in the tire circumferential direction C are completely coincident.

In other words, the label area 70 and the communication device 41 of this embodiment overlap in the tire wall thickness direction D. The communication device 41 of this embodiment overlaps with the label area 70 in the tire wall thickness direction D in its entire extension areas in the tire radial direction B and in the tire circumferential direction C. In other words, the entire communication device 41 of this embodiment overlaps with the label area 70 in the tire wall thickness direction D. However, only a part of the communication device 41 may overlap with the label area 70 in the tire wall thickness direction D. The entire label area 70 may overlap with the communication device 41 in the tire wall thickness direction D. Furthermore, the contour of the label area 70 may coincide with the contour of the communication device 41 in the tire wall thickness direction D. In other words, the entire label area 70 may overlap with the entire communication device 41 in the tire wall thickness direction D.

Thus, the label area 70 of this embodiment is disposed in such a position that at least a part of the label area 70 overlaps with the communication device 41 in the tire wall thickness direction D. Therefore, the position of the communication device 41 can be identified by identifying the label area 70 from outside the tire 1.

The hue of the label area 70 may differ, for example, according to the depth of embedment of the communication device 41 in the tire wall thickness direction D. For example, it is conceivable that a yellow label area 70 indicates a depth of 1 mm or more and less than 5 mm from the outer surface of the tire 1, a blue label area 70 indicates a depth of 5 mm or more and less than 15 mm from the outer surface of the tire 1, and the like. However, not limited to the hue of the label area 70, for example, the outer shape of the label area 70 may be used to indicate the depth of embedment of the communication device 41 in the tire wall thickness direction D. The label area 70 of this embodiment is a part of the covering outer surface layer 42b of the covering body 42. Therefore, in this embodiment, the hue of the label area 70 described above is the same as the hue of the covering outer surface layer 42b, as the covering different-color layer 50. However, of the covering outer surface layer 42b, only the label area 70 may have a different hue.

As illustrated in FIGS. 5 and 6, the label area 70 of this embodiment may include a light emission area 71. The light emission area 71 may be, for example, a phosphorescent area that emits stored light. The provision of the light emission area 71 in the label area 70 allows the label area 70 to be easily identified from outside the tire 1 in a dark environment, such as at night or in a dark place. Therefore, the position of the communication device 41 can be easily identified in the dark environment. The light emission area 71 of the label area 70 is not particularly limited as long as the light emission area 71 is an area that emits light to the outside. The light emission area 71 may be composed of, for example, phosphorescent paint containing a phosphorescent material as described above.

As illustrated in FIGS. 5 and 6, the label area 70 may include a non-light emission area 72 surrounded by the light emission area 71. The provision of such a non-light emission area 72 emphasizes the contrast between the light emission area 71 and the non-light emission area 72 in a dark environment. Therefore, the visibility of the label area 70 in the dark environment can be enhanced.

In this embodiment, the entire circumference of the non-light emission area 72 is surrounded by the light emission area 71 in the front view of the label area 70 (see FIGS. 5 and 6). More specifically, the light emission area 71 of the label area 70 of this embodiment is annular in shape in the front view of the label area 70 (see FIGS. 5 and 6). The non-light emission area 72 is provided inside the annular light emission area 71 in the front view of the label area 70 (see FIGS. 5 and 6). However, the configuration of the light emission area 71 and the non-light emission area 72 of the label area 70 is not limited to this. As long as the non-light emission area 72 of the label area 70 can be identified in a dark environment, there may be a position at which no light emission area 71 is provided around the non-light emission area 72. Such an aspect includes, for example, a non-light emission area 72 surrounded by an approximately C-shaped light emission area 71 in the front view of the label area 70 (see FIGS. 5 and 6). However, as in this embodiment, the entire circumference of the non-light emission area 72 is preferably surrounded by the light emission area 71 in the front view of the label area 70 (see FIGS. 5 and 6). This can further emphasize the contrast between the light emission area 71 and the non-light emission area 72 in a dark environment.

The non-light emission area 72 may have a different color from the light emission area 71. Here, the "different color" means not only that at least one of hue, brightness, or saturation is different, but also that there is a difference that can be visually grasped, such as a difference in gloss. This can enhance the distinguishability of each of the light emission area 71 and the non-light emission area 72 in a bright environment.

The non-light emission area 72 may be provided on a fine uneven surface. The fine uneven surface may have, for example, a base surface and a plurality of ridges with a height of 0.1 to 1.0 mm that is arranged in parallel on the base surface. The distance between the tops of two adjacent ridges is preferably 0.3 to 1.5 mm, for example. The provision of the non-light emission area 72 on such a fine uneven surface can control the reflection of light from the non-light emission area 72 in a bright environment, and therefore can achieve a high contrast with the surrounding light emission area 71, which reflects light. Therefore, the distinguishability of each of the light emission area 71 and the non-light emission area 72 can be further enhanced in the bright environment.

As illustrated in FIG. 1, the exposed portion 43 of this embodiment protrudes outside from the outer surface of the tire body 10, but is not limited to this configuration. In other words, the exposed surface, which is a surface of the exposed portion 43 of this embodiment, is a convex surface, but is not limited to this configuration. The exposed surface, which is a surface of the exposed portion 43, may be approximately flush with the outer surface of the tire body 10. However, as in this embodiment, the exposed surface, which is a surface of the exposed portion 43, is preferably the convex surface. This prevents a reduction in the visibility of the label area 70 from the outside, for example, prevents the label area 70 covered with mud or the like from being difficult to see from the outside.

The label area 70 of this embodiment is provided on a first side outer surface 14a1, which is an outer surface of the first side portion 10b1, but as illustrated in FIG. 1, another label area 80 may be provided on a second side outer surface 14a2, which is an outer surface of the second side portion 10b2. The other label area 80 may be disposed, for example, at the same position as the communication device 41 in the tire circumferential direction C. This makes it possible to identify the position of the communication device 41 in the tire circumferential direction C even from the side of the second side portion 10b2, in contrast to the case of providing only the label area 70. Therefore, for example, even when the tire 1 is mounted on a vehicle with the first side portion 10b1 disposed inside the vehicle, and the label area 70 is not visible from outside the vehicle, the position of the communication device 41 can be narrowed down based on the other label area 80 on the second side portion 10b2. The position of the communication device 41 can be easily identified regardless of the orientation of the first side portion 10b1 of the tire body 10 mounted on the vehicle.

The other label area 80 provided on the outer surface of the second side portion 10b2 may include a light emission area, as with the label area 70 described above. This can enhance visibility from the surroundings in a dark environment. The other label area 80 provided on the outer surface of the second side portion 10b2 preferably has a color or shape that can be distinguished from the surroundings. Therefore, it is possible to enhance visibility from the surroundings in a bright environment.

### <Second Embodiment>

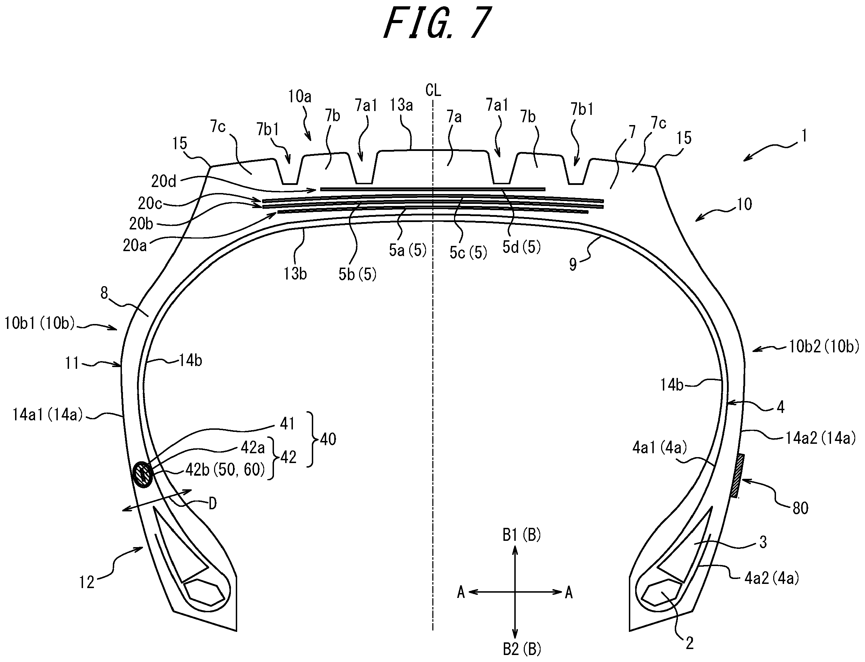

Next, with reference to FIG. 7, a pneumatic tire 100 (hereinafter simply referred to as "tire 100") as an embodiment of the tire according to the present invention will be exemplarily described. FIG. 7 is a cross-sectional view of the tire 100 in the tire width direction. The tire 100 of this embodiment differs in configuration from the tire 1 (see FIG. 1) described above in that the entirety of the covered communication device 40 is completely embedded within the tire body 10. Therefore, this difference will be mainly described here, and a description of the configuration common to the tire 1 of the first embodiment is omitted.

As illustrated in FIG. 7, the covered communication device 40 of this embodiment is not exposed outside the tire body 10. Even in such a case, as in the first embodiment, when the communication device 41 embedded in the tire 100 is removed by hollowing out the tire 100, it is possible to confirm, using the distinction portion 60, whether the entirety of the communication device 41 is included in a hollowed out portion, by performing the hollowing out method as illustrated in FIG. 2.

In this embodiment, the entirety of the covered communication device 40 is embedded in the tire body 10, so there is no label area 70 (see FIG. 1), as illustrated in the first embodiment, on the first side outer surface 14a1 of the first side portion 10b1 of the tire body 10. Therefore, to remove the communication device 41 from the tire 1, for example, a position on the first side outer surface 14a1 that overlaps with the communication device 41 in the tire wall thickness direction D may be estimated using a device, such as a reader/writer, that can communicate with the communication device 41. However, for the purpose of making it easier to identify the position of the communication device 41 from outside the tire 1, a separate label area that indicates the position of overlap with the communication device 41 in the tire wall thickness direction D is preferably provided on the first side outer surface 14a1.

### <Third Embodiment>

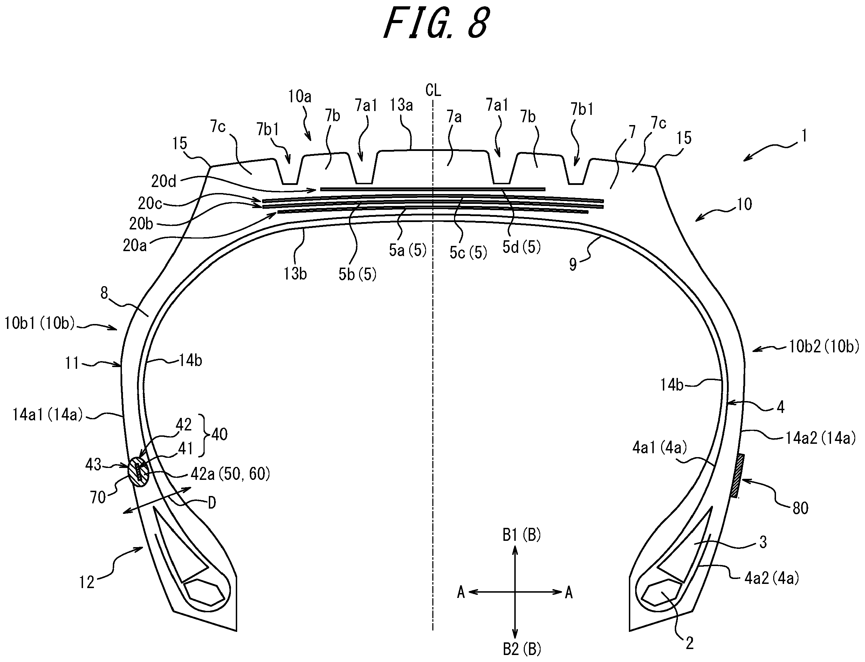

Next, with reference to FIG. 8, a pneumatic tire 200 (hereinafter simply referred to as "tire 200") as an embodiment of the tire, not according to the present invention, will be exemplarily described. FIG. 8 is a cross-sectional view of the tire 200 in the tire width direction. The tire 200 of this embodiment differs in the configuration of the covering body 42 from the tire 1 (see FIG. 1) described above, and the other configuration is common. Therefore, the above difference will be mainly described here, and a description of the configuration common to the tire 1 of the first embodiment is omitted.

The covering body 42 of this embodiment has the covering rubber 42a that covers the periphery of the communication device 41. The covering different-color layer 50, as the distinction portion 60, is provided in the covering rubber 42a.

The covering different-color layer 50, as the distinction portion 60, may be, for example, a part of the covering rubber 42a or the entirety of the covering rubber 42a. In other words, the covering different-color layer 50, as the distinction portion 60, may be provided only at some position of the covering rubber 42a in a thickness direction, or may be provided in the covering rubber 42a in the entire thickness direction. As illustrated in FIG. 8, the covering different-color layer 50 of this embodiment is constituted of the entirety of the covering rubber 42a.

Thus, providing the covering different-color layer 50, as the distinction portion 60, in the covering rubber 42a makes it easier to form the covering different-color layer 50, as the distinction portion 60, thicker as compared to the configuration of providing the covering different-color layer 50 in the covering outer surface layer 42b (see FIG. 1), as in the first embodiment. Therefore, when the covering different-color layer 50, as the distinction portion 60, is exposed in the hollowed out hole 91 (see FIGS. 3 and 4), the exposed area of the covering different-color layer 50 can be increased. As a result, the distinguishability of the distinction portion 60 on the inner surface of the hollowed out hole 91 formed in the tire 1 can be enhanced.

The covering different-color layer 50 provided on the covering rubber 42a may be, for example, a rubber composition that is colored by mixing pigment other than carbon black. Therefore, when the entirety of the covering rubber 42a constitutes the covering different-color layer 50, the entire rubber composition constituting the covering rubber 42a may be colored by mixing pigment other than carbon black. When only a part of the covering rubber 42a constitutes the covering different-color layer 50, for example, two layers of a black rubber composition that sandwich one layer of a rubber composition colored by mixing pigment other than carbon black therebetween may be vulcanized.

Even when the entirety of the covering rubber 42a constitutes the covering different-color layer 50, as in this embodiment, the label area 70 can be realized by the exposed surface, which is a surface of the exposed portion 43 exposed from the tire body 10.

As in the first embodiment, the label area 70 may include the light emission area 71 (see FIG. 5 and the like) and the non-light emission area 72 (see FIG. 5 and the like). In this embodiment, the light emission area 71 can be realized, for example, by a rubber composition in which a phosphorescent material is mixed together with pigment.

The tire according to the present invention is not limited to the specific configuration described in the above embodiments, and various variations, modifications, and combinations are possible without departing from the scope of the claims.

### INDUSTRIAL APPLICABILITY

The present invention relates to a tire.

### REFERENCE SIGNS LIST

- 1, 100, 200: tire
- 2: bead core
- 3: bead filler
- 4: carcass
- 4a: carcass ply
- 4a1: body part
- 4a2: folded part
- 5: belt
- 5a - 5d: first to fourth belts
- 7: tread rubber
- 7a: center land area
- 7a1: inner circumferential groove
- 7b: intermediate land area
- 7b1: outer circumferential groove
- 7c: shoulder land area
- 8: side rubber
- 9: inner liner
- 10: tire body
- 10a: tread portion
- 10b: side portion
- 10b1: first side portion
- 10b2: second side portion
- 11: sidewall portion
- 12: bead portion
- 13a: tread outer surface
- 13b: tread inner surface
- 14a: side outer surface
- 14a1: first side outer surface
- 14a2: second side outer surface
- 14b: side inner surface
- 15: tread end
- 20a - 20d: first to fourth belt layers
- 40: covered communication device
- 41: communication device
- 42: covering body
- 42a: covering rubber
- 42b: covering outer surface layer
- 43: exposed portion
- 50: covering different-color layer
- 60: distinction portion
- 70: label area
- 71: light emission area
- 72: non-light emission area
- 80: label area
- 90: hollowing out member
- 91: hollowed out hole
- A: tire width direction
- B: tire radial direction
- B1: outer side in tire radial direction
- B2: inner side in tire radial direction
- C: tire circumferential direction
- D: tire wall thickness direction
- O: central axis of tire
- CL: tire equatorial plane
- L1: virtual circle
- L2: virtual straight line

## Claims

1. A tire (1, 100, 200) comprising:
a tire body (10); and
a covered communication device (40) at least a part of which is embedded in the tire body (10),
wherein
the covered communication device (40) comprises:
a communication device (41); and
a covering body (42) that covers a periphery of the communication device (41), and
the covering body (42) comprises:
a distinction portion (60) that is distinguishable from a portion located around the covering body (42), of the tire body (10), in a cross-sectional view in a plane passing through the covered communication device (40);
a covering different-color layer (50) having a different hue from the portion located around the covering body (42), of the tire body (10), wherein the distinction portion (60) is the covering different-color layer (50);
the tire being **characterized in that** the covering body (42) further comprises
covering rubber (42a) that covers the periphery of the communication device (41); and
a covering outer surface layer (42b) that covers a periphery of the covering rubber (42a), wherein the covering different-color layer (50) is the covering outer surface layer (42b).

2. The tire according to claim 1, wherein a part of the distinction portion (60) of the covering body (42) is exposed from an outer surface (13a, 14a) of the tire body (10).

3. The tire according to any one of claims 1 or 2, wherein the distinction portion (60) of the covering body (42) includes a light emission area (71).

## Patentansprüche

1. Reifen (1, 100, 200), umfassend:
einen Reifenkörper (10); und
eine bedeckte Kommunikationsvorrichtung (40), von der mindestens ein Teil in den Reifenkörper (10) eingebettet ist,
wobei
die bedeckte Kommunikationsvorrichtung (40) umfasst:
eine Kommunikationsvorrichtung (41); und
einen Abdeckkörper (42), der einen Randbereich der Kommunikationsvorrichtung (41) bedeckt, und
der Abdeckkörper (42) umfasst:
einen Unterscheidungsabschnitt (60), der von einem Abschnitt unterscheidbar ist, der sich um den Abdeckkörper (42) des Reifenkörpers (10) herum befindet, in einer Querschnittsansicht in einer Ebene, die durch die bedeckte Kommunikationsvorrichtung (40) verläuft;
eine Abdeckschicht anderer Farbe (50), die einen anderen Farbton aufweist als der Abschnitt, der sich um den Abdeckkörper (42) des Reifenkörpers (10) herum befindet, wobei der Unterscheidungsabschnitt (60) die Abdeckschicht anderer Farbe (50) ist;
wobei der Reifen **dadurch gekennzeichnet ist, dass** der Abdeckkörper (42) weiter umfasst
einen Abdeckgummi (42a), der den Randbereich der Kommunikationsvorrichtung (41) bedeckt; und
eine äußere Abdeckoberflächenschicht (42b), die einen Randbereich des Abdeckgummis (42a) bedeckt, wobei die Abdeckschicht anderer Farbe (50) die äußere Abdeckoberflächenschicht (42b) ist.

2. Reifen nach Anspruch 1, wobei ein Teil des Unterscheidungsabschnitts (60) des Abdeckkörpers (42) von einer äußeren Oberfläche (13a, 14a) des Reifenkörpers (10) freiliegt.

3. Reifen nach einem der Ansprüche 1 oder 2, wobei der Unterscheidungsabschnitt (60) des Abdeckkörpers (42) eine Lichtemissionsfläche (71) einschließt.

## Revendications

1. Pneu (1, 100, 200) comprenant :
un corps de pneu (10) ; et
un dispositif de communication couvert (40) dont au moins une partie est intégrée dans le corps du pneu (10),
dans lequel
le dispositif de communication couvert (40) comprend :
un dispositif de communication (41) ; et
un corps de revêtement (42) qui recouvre la périphérie du dispositif de communication (41), et
le corps de revêtement (42) comprend :
une partie de distinction (60) qui se distingue d'une partie située autour du corps de couverture (42), du corps du pneu (10), dans une vue en coupe dans un plan passant par le dispositif de communication couvert (40) ;
une couche de revêtement de couleur différente (50) présentant une teinte différente de la partie située autour du corps de revêtement (42), du corps du pneu (10), dans lequel la partie de distinction (60) est la couche de revêtement de couleur différente (50) ;
le pneu étant **caractérisé en ce que** le corps de revêtement (42) comprend en outre
le revêtement en caoutchouc (42a) qui recouvre la périphérie du dispositif de communication (41) ; et
une couche de surface extérieure de revêtement (42b) qui recouvre une périphérie du caoutchouc de revêtement (42a), dans lequel la couche de revêtement de couleur différente (50) est la couche de surface extérieure de revêtement (42b).

2. Pneu selon la revendication 1, dans lequel une partie de la partie distinctive (60) du corps de revêtement (42) est exposée à partir d'une surface extérieure (13a, 14a) du corps du pneu (10).

3. Pneu selon l'une quelconque des revendications 1 ou 2, dans lequel la partie distinctive (60) du corps de revêtement (42) inclut une zone d'émission de lumière (71).
